# EUROPÄISCHE PATENTANMELDUNG

(11) **EP 0 638 350 A2**
(43) Veröffentlichungstag der Anmeldung: **15.02.1995**
(21) Anmeldenummer: 94111928.1
(22) Anmeldetag: 30.07.1994
(51) Int. Cl.: B01D 53/04, B01D 53/58, B01D 53/86, B01J 20/02

(54) **Sorption von NH3 mit dotierten oxidischen Sorbenzien mit anschliessender katalytischer Oxidation des Desorbats**

(30) Priorität: 09.08.1993 DE 4326683
(71) Anmelder: Solvay Deutschland GmbH, D-30173 Hannover (DE)
(72) Erfinder: Brodkrob, Gregor, D-31535 Neustadt 1 (DE); Falke, Holger, Dr., D-30966 Hemmingen (DE); Warmbold, Andreas, D-31275 Lehrte (DE); Schmidt, Torsten, Dr., D-30169 Hannover (DE); Schultz, Egon, D-31275 Lehrte (DE); Hoffmeister, Michael, Dr., D-30173 Hannover (DE)
(74) Vertreter: Lauer, Dieter, Dr.

(57) **Zusammenfassung**

Das deutsche Offenlegungsschrift DE-OS 43 05 781 beschreibt ein Verfahren zur Sorption von NH₃ mit Sorbenzien, umfassend bestimmte Übergangsmetallsalze, insbesondere Kupfersalze, auf vorzugsweise amorphen oxidischen Trägern.

Das sorbierte NH₃ kann wieder desorbiert werden. Es wurde jetzt gefunden, daß das desorbierte NH₃ über geeigneten Katalysatoren zu N₂ und Wasser oxidiert werden kann. Bei dieser Vorgehensweise kann der für die Reinigung NH₃ enthaltender Gasströme benötigte Energieaufwand stark reduziert werden.

## Beschreibung

Die Erfindung bezieht sich auf ein Verfahren zur Sorption von NH₃ mit oxidischen Sorbenzien, die mit bestimmten Übergangsmetallionen dotiert sind.

Es ist bereits bekannt, NH₃ aus Gasen durch Kontaktieren mit Reagenzien, beispielsweise Säuren, zu sorbieren. Die DE-OS 40 20 914 lehrt die katalytische Zersetzung von NH₃, gegebenenfalls in Anwesenheit von Sauerstoff, unter selektiver Stickstoffbildung.

Die nicht vorveröffentlichte deutsche Offenlegungsschrift DE-OS 43 05 781 schlägt ein Verfahren zur Sorption von NH₃ aus Gasen vor, bei welchem man die Gase mit einem selektiven NH₃-Sorbens kontaktiert, welches ein Sorptionsmittel ausgewählt aus der Gruppe der anorganischen oder organischen Salze mit Fe²⁺, Fe³⁺, Co²⁺, Ni²⁺, Cr²⁺, Cr³⁺, Cu¹⁺, Cu²⁺, Mn²⁺ und Zn²⁺-Ionen auf einem oxidischen Träger auf Basis von SiO₂, Al₂O₃ oder Alumosilikat, wobei der Träger einen mittleren Porendurchmesser von mindestens 25 Angström aufweist.

Bevorzugt verwendet man dabei ein Sorbens, dessen Wassergehalt im Bereich von 0 bis 10 Gew.-%, bezogen auf das Gesamtgewicht des Sorbens, liegt. Das Wasser kann gegebenenfalls chemisch gebunden sein, z. B. silikatisch.

Vorzugsweise verwendet man Sorbenzien, die als Sorptionsmittel ein anorganisches Salz mit Fe²⁺, Fe³⁺, Cu²⁺, Mn²⁺ oder Zn²⁺-Ionen, vorzugsweise Cu²⁺-Ionen.

Organische Salze können als Anionen beispielsweise deprotonierte negativ geladene Reste von organischen Säuren, beispielsweise Carbonsäuren, aufweisen. Beispiele sind Acetat-Salze, z. B. Kupferacetat. Geeignet sind auch Zitrate, beispielsweise Kupferzitrat, oder Formiate, z. B. Kupferformiat.

Bevorzugt verwendet man im Verfahren der DE-OS 43 05 781 als Sorptionsmittel anorganische Salze der genannten Metall-Kationen. Beispielsweise kann man Halogenide, Sulfate, Phosphate oder Nitrat einsetzen. Besonders gut geeignet sind als Sorptionsmittel die Fluoride, Chloride, Sulfate oder Nitrate, insbesondere Kupferfluorid, Kupferchlorid, Kupfersulfat oder Kupfernitrat, wobei das Kupfer jeweils in der Oxidationsstufe +2 vorliegt.

Als oxidische Träger kann man amorphe Träger auf Basis der obengenannten Oxide verwenden. Man kann auch amorphe oxidische Träger einsetzen, die kristalline Materialien, beispielsweise Zeolithe, enthalten. Derartige kristalline Anteile liegen zweckmäßig in einem Bereich von 0,1 bis 80 Gew.-% im Sorbens vor.

Bevorzugt verwendet man amorphe oxidische Träger, insbesondere auf Basis von SiO₂, Al₂O₃ oder Alumosilikat. Hervorragend geeignet sind Sorbenzien auf Basis von amorphem SiO₂ und Alumosilikat, die als Sorptionsmittel Kupferfluorid oder -chlorid, Kupfersulfat oder Kupfernitrat mit Kupfer der Oxidationsstufe 2+ aufweisen.

Das Kation des enthaltenen Sorptionsmittels kann in einer Menge von 0,1 bis 40 Gew.-%, vorzugsweise 0,5 bis 30 Gew.-%, bezogen auf das Gesamtgewicht des Sorbens, enthalten sein.

Sofern man Sorbenzien mit amorphem oxidischem Trägermaterial verwendet, liegt das Porenvolumen zweckmäßig im Bereich von 0,1 bis 1 ml/g. Der mittlere Porendurchmesser des amorphen oxidischen Trägers liegt vorteilhaft im Bereich von 25 bis 10.000 Å, vorzugsweise 25 bis 5.000 Å.

Dabei eignen sich Sorbenzien mit Makroporen, d.h. einem mittleren Porendurchmesser von 200 Å oder größer, besonders gut bei der Abtrennung von NH₃ aus feuchten Gasströmen. Die relative Feuchte kann bis zu 100 % betragen. Die Kapazität dieser Sorbenzien steigt sogar bei höherer relativer Feuchte; die Selektivität bezüglich der Ammoniaksorption ist im Bereich von 20 % bis 80 % relativer Feuchte besonders hoch. Sorbenzien mit mittleren Porendurchmessern im Bereich von 300 bis 3.000 Å sind besonders vorteilhaft.

Das Sorbens kann in verschiedenster Raumform im Verfahren des Hauptpatents eingesetzt werden, z. B. als Granulat, Strangpreßling oder Monolith. Die Sorbenzien können, wie später auch beschrieben wird, nach der Sol-Gel-Methode hergestellt werden. Dabei können sie zu beliebigen Formen gegossen oder, in der Stufe des Gels, in die gewünschte Form geschnitten werden. Besonders bevorzugt sind Sorbenzien in Perlform. Der Durchmesser dieser perlförmigen Sorbenzien liegt zweckmäßig im Bereich von 0,5 bis 10 mm. Derartige perlförmige Sorbenzien können, wie noch beschrieben wird, nach der Öltropfmethode hergestellt werden.

Aufgabe der vorliegenden Erfindung ist es, das aus der deutschen Offenlegungschrift DE-OS 43 05 781 bekannte Verfahren zur Sorption von NH₃ aus Gasen dahingehend zu modifizieren, daß eine technisch einfache energiesparende Unschädlichmachung des sorbierten Ammoniaks möglich ist. Diese Aufgabe wird durch das Verfahren der vorliegenden Erfindung gelöst.

Das Verfahren der vorliegenden Erfindung sieht vor, daß man das NH₃ enthaltende Gas mit einem selektiven NH₃-Sorbens, umfassend ein Sorptionsmittel ausgewählt aus der Gruppe der anorganischen oder organischen Salze mit Fe²⁺, Fe³⁺, Co²⁺, Ni²⁺, Cr²⁺, Cr³⁺, Mn²⁺, Zn²⁺, Cu¹⁺ oder Cu²⁺-Ionen auf einem oxidischen Träger auf Basis von SiO₂, Al₂O₃ oder Alumosilikat kontaktiert, wobei der Träger einen mittleren Porendurchmesser von mindestens 25 Angström aufweist, man das mit NH₃ beladene Sorbens unter Desorption des NH₃ regeneriert und man das NH₃ enthaltende Desorbat zur Oxidation des NH₃ katalytisch behandelt.

Die katalytische Behandlung zwecks Oxidation des NH₃ kann man mit bekannten, für diesen Zweck verwendbaren Katalysatoren durchführen. Gut geeignet sind beispielsweise die aus der deutschen Offenlegungsschrift 40 20 914 bekannten Katalysatoren. Dabei handelt es sich um Katalysatoren, welche ein katalytisch aktives Gemisch aus Edelmetall und Übergangsmetalloxid im Molverhältnis 1:10 bis 1:200 aufweisen und bei welchen das Edelmetall ausgewählt ist aus der Platin, Palladium, Rhodium, Iridium und deren Gemischen umfassenden Gruppe und das Übergangsmetalloxid ausgewählt ist aus der Gruppe der Molybdänoxide, Vanadiumoxide und deren Gemischen. Sehr gut geeignet sind auch die aus der deutschen Offenlegungsschrift DE-OS 41 16 362 bekannten Katalysatoren, welche ein katalytisch aktives Gemisch aus Oxiden von mindestens zwei Metallen der Mangan, Eisen, Kobalt, Nickel, Kupfer und Silber umfassenden Gruppe aufweisen. Sehr gut geeignet sind weiterhin Katalysatoren, die Pt als einziges katalytisch aktives Metall auf üblichen keramischen Trägern, z. B. auf SiO₂ oder Al₂O₃, aufweisen. Der Platingehalt liegt im Bereich von 0,1 bis 3, vorzugsweise 0,1 bis 1 Gew.-%. Ein sehr gut geeigneter Katalysator für die Oxidation von NH₃ ist der Katalysator "EnviCat KCO SG 1137/0.3" der Solvay Catalysts GmbH, Hannover.

Vorzugsweise nimmt man die Regenerierung des Sorbens bei einer Temperatur zwischen 180 °C und 250 °C vor. Die Temperatur des Sorbats wird dann auf die für die optimale selektive katalytische Oxidation notwendige Temperatur erhitzt oder abgekühlt. Eine besonders vorteilhafte Ausführungsform des erfindungsgemäßen Verfahrens sieht vor, daß man das noch heiße Desorbat, das man bei einer Temperatur zwischen 180 °C und 250 °C desorbiert hat, sofort, d. h. ohne daß eine unerwünschte Abkühlung erfolgt, katalytisch behandelt. Dabei ist es besonders vorteilhaft, wenn man einen Katalysator verwendet, der im genannten Temperaturbereich hohe Aktivität bzw. hohe Selektivität für die Oxidation von NH₃ zu N₂ und Wasser aufweist. Dies ist u. a. bei den obengenannten Katalysatoren, insbesondere bei den Katalysatoren mit Pt auf keramischem Träger der Fall. Es ist deshalb besonders vorteilhaft, wenn man die Regenerierung des Sorbens bei einer Temperatur zwischen 180 °C und 250 °C, vorzugsweise 180 °C und 210 °C vornimmt und das Desorbat bei einer Temperatur zwischen 180 °C und 250 °C, vorzugsweise 180 °C und 210 °C katalytisch behandelt.

Das Desorbat kann man auf einen NH₃-Gehalt zwischen 0,05 ppm und 10 Vol.-% einstellen. Vorteil des Verfahrens ist es, daß der Ammoniak-Gehalt des Gases auf einfache Weise aufkonzentriert und dann oxidiert werden kann. Entsprechend geringer ist der Energiebedarf für die Aufheizung des zu reinigenden Gases bei der katalytischen Behandlung. Gemäß einer Variante der vorliegenden Erfindung sieht man vor, daß man das Desorbat auf einen NH₃-Gehalt zwischen 1 und 10 Vol.-% einstellt und die katalytische Oxidation autotherm betreibt. Bei hohen NH₃-Gehalten ist eine Abwärmenutzung möglich. Zur Einstellung der gewünschten Selektivität ist bei hohen Konzentrationen eine Fahrweise mit verringertem Sauerstoffgehalt im Regenerationskreislauf notwendig.

Es wurde gefunden, daß besonders wenig Stickoxide gebildet werden, wenn man den Sauerstoffgehalt auf einen Wert unterhalb des stöchiometrisch zur Oxidation von NH₃ zu N₂ und H₂O notwendigen Gehaltes einstellt. Der stöchiometrisch notwendige Wert entspricht einem Volumenverhältnis NH₃ : O₂ von 4 : 3. Besonders im Bereich NH₃ : O₂ von 4 : 1,6 bis 4 : 2,4 (Volumenverhältnis), insbesondere 4 : 1,8 bis 4 : 2,2 werden gute Ergebnisse bezüglich Selektivität und Umsatz erzielt. Bei einem Gehalt von beispielsweise 10.000 ppm NH₃ ergeben sich bei einem Gehalt von 4.000 bis 6.000 ppm O₂ entsprechend gute Werte für Selektivität und Umsatz.

Im Prinzip kann das erfindungsgemäße Verfahren zur Abtrennung und Unschädlichmachung von Ammoniak aus beliebigen, Ammoniak enthaltenden Gasen angewendet werden. Es eignet sich sehr gut beispielsweise für Ammoniak enthaltende Sumpf- oder Deponiegase, landwirtschaftliche Abgase, beispielsweise aus der Tierhaltung, sowie auch industrielle Abgase, beispielsweise aus der Soda-Fabrikation. Ammoniak kann auch aus Flüssigkeiten, z. B. Wasser, Gülle oder industriellen, NH₃ enthaltenden Abwässern sorbiert werden. Auch wasserhaltiges (Gehalt an Wasser von wenigen ppm, z. B. 5 ppm, bis hin zur Sättigungsgrenze) Abgas, das NH₃ enthält, kann behandelt werden. Zweckmäßig stellt man einen alkalischen pH ein, z. B. einen pH-Wert von 9 oder größer, und leitet Strippgase durch die Flüssigkeit. Aus dem resultierenden, NH₃ enthaltenden Strippgas kann das NH₃ auch in Anwesenheit von Wasser selektiv sorbiert werden.

Das im erfindungsgemäßen Verfahren anzuwendende Sorbens ist sehr aktiv und weist eine vergleichsweise hohe Pufferkapazität aus. Es kann daher sowohl bei Gasströmen angewendet werden, die niedrige Konzentrationen an Ammoniak, beispielsweise 10 ppm und niedriger aufweisen, als auch bei solchen, die hohe Konzentrationen an Ammoniak aufweisen, beispielsweise 100.000 ppm und mehr. Das erfindungsgemäße Verfahren kann daher nicht nur angewendet werden, um Abgase durch Abtrennung des vorhandenen Ammoniaks umweltverträglicher zu machen, sondern es kann auch angewendet werden, um den Ammoniakgehalt aus industriell zu verwendenden Prozeßströmen zu entfernen. Beispielsweise kann man aus katalytisch zu behandelnden Gasen den Ammoniakgehalt durch das erfindungsgemäße Verfahren selektiv vermindern und dadurch gegen Ammoniak empfindliche Katalysatoren gegen Vergiftung durch Ammoniak schützen. Gerade hier ist die hohe Pufferkapazität, Selektivität und hohe Aktivität des im erfindungsgemäßen Verfahren einzusetzenden dotierten oxidischen Materials von Vorteil. Der Bedarf an Energie zur Unschädlichmachung des NH₃ durch selektive Oxidation zu N₂ und H₂O wird durch das erfindungsgemäße Verfahren gesenkt.

Im folgenden werden die auch in der deutschen Offenlegungsschrift DE-OS 43 05 781 beschriebenen Verfahren zur Herstellung des Sorbens angegeben. Die Herstellung oxidischer Materialien auf Basis von amorphem SiO₂, Al₂O₃ oder Alumosilikat ist dem Fachmann bekannt. Kristallines Alumosilikat beispielsweise kann analog dem Verfahren der DE-AS 1 038 015 hergestellt werden. Dabei wird Natrium-aluminat-Lösung und Natriumsilikat-Lösung unter Gel-Bildung miteinander vermischt und zur Kristallisation gebracht. Je nach Mol-Verhältnis von Silicium und Aluminium können verschiedene Zeolithe erzeugt werden. Anschließend können sich übliche Verfahrensstufen wie Altern, Basenaustausch, Trocknen oder Tempern anschließen. Durch Imprägnieren mit einem der oben als zu verwendendes Sorptionsmittel bezeichneten Salze wird das erfindungsgemäße Sorbens hergestellt.

Die Herstellung amorpher Alumosilikate kann analog dem in der DE-OS 29 17 313 beschriebenen Verfahren erfolgen. Dabei werden eine Aluminat- und eine Silikat-Lösung vereinigt. Wenn das Gemisch sofort in ein Fällöl gegeben wird, bilden sich perlförmige Körper aus amorphem Alumosilikat. Zur Herstellung des erfindungsgemäßen Sorbens kann man einer oder beiden Ausgangslösungen Kupfersalze, beispielsweise Kuprate, zufügen; man verzichtet dann auf den Basenaustausch. Vorzugsweise geht man jedoch so vor, daß man die gebildeten perlförmigen Körper zunächst altert und gewünschtenfalls trocknet und tempert und mit einer Dotierlösung, die ein oder mehrere der oben als Sorptionsmittel angegebenen Salze enthält, kontaktiert. Man kann vor dem Trocknen imprägnieren. Vorzugsweise imprägniert man nach dem Trocknen, da hierbei besonders wirksame Sorbenzien erhalten werden. Nach dem Imprägnieren, das gewünschtenfalls mehrfach durchgeführt werden kann, wird das Sorbens getrocknet, bis der Wassergehalt zwischen 0 und 10 Gew.-% beträgt.

Eine weitere Möglichkeit zur Herstellung der im Verfahren der vorliegenden Erfindung anzuwendenden Sorbenzien besteht darin, eine (saure) Aluminiumsulfat-Lösung und eine Silikat-Lösung miteinander zu vereinigen und dabei in amorphes Alumosilikat zu überführen. Auch bei diesem Verfahren erhält man bei sofortiger Eingabe der miteinander vermischten Lösungen in ein Fällöl wiederum perlförmige Körper. Diese können wie oben beschrieben, gewünschtenfalls nach Altern, Trocknen und Tempern sowie Basenaustausch, mit Lösungen der angegebenen organischen oder anorganischen Salze kontaktiert werden. Danach werden die Sorbenzien getrocknet.

Ein Sorbens auf Basis von amorphem SiO₂ wird erhalten, wenn man Silikat-Lösung, z. B. Wasserglas, mit Säurelösung vereinigt. Bei Eintropfen in ein Fällöl erhält man wiederum perlförmige Körper, die, gewünschtenfalls nach Altern, Trocknen und Tempern sowie Basenaustausch mit den angegebenen Salzen imprägniert werden. Anschließend wird wiederum getrocknet.

Um Sorbenzien zu erhalten, die amorphe oxidische Träger mit kristallinen Anteilen aufweisen, kann man beispielsweise einer oder beiden der beim Herstellungsverfahren miteinander zu vereinigenden Ausgangslösungen diese kristallinen Anteile, beispielsweise Zeolithe, in mehr oder weniger fein verteilter Form dispergiert zusetzen.

Selbstverständlich können auch käufliche oxidische Materialien mit den obenangegebenen Sorptionsmitteln imprägniert werden. Ein sehr wirksames Sorbens kann beispielsweise durch Imprägnieren des käuflichen Sorbens "AF25^{R}", Lieferant Solvay Catalysts GmbH, mit einem der obenbezeichneten Salze, beispielsweise Kupferchlorid, hergestellt werden. Dieses Sorbens AF25^{R} ist aluminiumfrei, besteht aus amorphem SiO₂, liegt in Perlform vor und hat eine BET-Oberfläche von 780 m²/g und ein Porenvolumen von 0,55 ml/g. Der mittlere Porenradius beträgt 12,5 Å, der Porendurchmesser 25 Å. Gut brauchbar ist auch das Sorbens "AF125^{R}", welches einen Porendurchmesser von 125 Å aufweist.

Für die Sorption von NH₃ aus feuchten Gasströmen eignet sich das, mit einem der oben bezeichneten Salze imprägnierte, Sorbens auf Basis von "AF500^{R}", Lieferant Solvay Catalysts GmbH, sehr gut. Das Sorbens AF500^{R} ist aluminiumfrei, besteht aus amorphen SiO₂, liegt in Perlform vor und hat eine BET-Oberfläche, ermittelt nach der Stickstoffmethode, von 75 m²/g. Das Porenvolumen beträgt 0,9 ml/g, der mittlere Porendurchmesser 500 Å.

Gut geeignet ist auch das Handelsprodukt "KC-Trockenperlen N^{R}", Lieferant Solvay Catalysts GmbH, Hannover. Es handelt sich hierbei um Perlen mit einem Durchmesser von etwa 3,5 mm, mit einem Rüttelgewicht von ca. 0,8 kg/l, einer spezifischen Oberfläche von ca. 750 m²/g. Die Zusammensetzung ist amorphe Kieselsäure und amorphes Alumosilikat, wobei der Anteil an SiO₂ ca. 97 % und der Anteil an Al₂O₃ ca. 3 % beträgt. Sehr gut geeignet ist auch das Sorbens "KC-Trockenperlen WS^{R}" vom gleichen Lieferanten. Die Zusammensetzung entspricht den Trockenperlen N, das Rüttelgewicht liegt bei ca. 0,7 kg/l, die spezifische Oberfläche beträgt ca. 650 m²/g. Auch die "KC-Trockenperlen W^{R}" sind gut brauchbar.

Geeignet ist beispielsweise auch Zeolith Y in der Natrium-Form, der durch Imprägnieren mit einem der obenbezeichneten Salze und dem anschließenden Trocknen in das erfindungsgemäße Sorbens überführt werden kann.

Auch mit einem der genannten Salze imprägnierter Blähton, ein amorphes, weitporiges Alumosilikat, ist als Sorptionsmittel verwendbar. Die Verwendung eines solcherart dotierten Blähtons als NH₃-Sorptionsmittel ist neu und ebenfalls Gegenstand der Erfindung, wie auch die mit den genannten Salzen, insbesondere anorganischen Salzen, besonders mit Cu²⁺, z. B. CuSO₄, CuCl₂, dotierte Blähtone neu und Gegenstand der Erfindung sind. Bevorzugte derartige Sorbenzien bestehen aus 0,1 bis 40 Gew.-% Salz, 0 bis 10 Gew.-% Wasser, Rest Blähton.

Die folgenden Beispiele sollen die Erfindung weiter erläutern, ohne sie in ihrem Umfang einzuschränken. Die Beispiele 1 bis 4 erläutern die Herstellung von Sorbenzien, die im Verfahren angewendet werden können. Beispiele 5 und 7 bis 8 erläutern die Durchführung des erfindungsgemäßen Verfahrens. Beispiel 6 erläutert die Herstellung eines neuen Sorbens auf Basis von Blähton.

### Beispiel 1:

### Herstellung eines Sorbens auf Basis von amorphem SiO₂ mit Kupferchlorid als Sorptionsmittel

Das Handelsprodukt "AF25^{R}", ein perlförmiges Absorptionsmittel aus amorphem SiO₂, wurde 24 Stunden lang bei Raumtemperatur mit einer Tränklösung kontaktiert, die pro Liter etwa 0,8 Mol CuCl₂-Dihydrat enthielt. Die überstehende Lösung wurde dann abgegossen und die getränkten Proben für 24 Stunden bei 150 °C im Trockenschrank getrocknet. Vor der Tränkung wurden die Proben durch Lagerung in feuchter Luft mit H₂O gesättigt.

Nach dem Trocknen wies das fertige Sorbens einen Kupfergehalt von 4,55 Gew.-% auf.

### Beispiel 2:

### Herstellung von Sorbenzien auf Basis von amorphem SiO₂ mit erhöhtem Kupfergehalt

Beispiel 1 wurde wiederholt. Diesmal wurde jedoch eine Tränklösung verwendet, die pro Liter etwa 2,0 Mol CuCl₂-Dihydrat enthielt. Das fertige Sorbens enthielt diesmal einen Kupfergehalt von 16,5 Gew.-%.

### Beispiel 3:

### Herstellung von kupferdotiertem Zeolith Y in der Natriumform

Zeolith Y in der Na-Form, Handelsprodukt NaY der Firma Grace, in Form von Granulat mit einem Durchmesser zwischen 1,6 und 3 mm, wurde 16 Stunden lang mit einer Tränklösung kontaktiert, welche 0,08 mol CuCl₂-Dihydrat pro Liter enthielt. Die überstehende Lösung wurde abgegossen und die getränkten Partikel 24 Stunden lang bei 150 °C im Trockenschrank getrocknet. Das erhaltene Sorbens wies einen Kupfergehalt von 5,13 Gew.-%, einen Natriumgehalt von 3,27 Gew.-% und einen Chlorgehalt unterhalb 0,33 Gew.-% auf.

### Beispiel 4:

### Herstellung eines Sorbens auf Basis von weitporigem, amorphem SiO₂ mit Kupfersulfat als Sorptionsmittel

Das Handelsprodukt "AF500^{R}" (mittlerer Porendurchmesser etwa 500 Å), ein perlförmiges Absorptionsmittel aus amorphem SiO₂, wurde 24 Stunden lang bei Raumtemperatur mit einer Tränklösung kontaktiert, die pro Liter etwa 0,85 Mol CuSO₄-Pentahydrat enthielt. Die überstehende Lösung wurde dann abgegossen und die getränkten Proben für 24 Stunden bei 150 °C im Trockenschrank getrocknet.
Nach dem Trocknen wies das fertige Sorbens einen Kupfergehalt von 4,3 Gew.-% auf.

### Beispiel 5:

### Sorption von NH₃ aus industrieller Abluft mit Desorption und katalytischer Oxidation des Desorbats.

Verwendet wurde das Sorbens aus Beispiel 4. Vor der Durchführung wurde das Sorbens für eine Dauer von 16 Stunden bei 160 °C aktiviert.

Eingesetzt wurde industrielles, feuchtes Abgas mit einem NH₃-Gehalt von 250 mg/m³. Das Abgas wurde mit einem Volumenstrom von 0,12 m³/h über eine Sorbensschüttung von 0,1 kg geleitet.

Das mit NH₃ beladene Sorbens wurde bei einer Temperatur von 200 °C desorbiert, wobei ein Luftstrom durch das Sorbens geleitet wurde. Es resultierte ein Desorbat mit einem NH₃-Gehalt von 6.000 ppm. Das noch heiße Desorbat wurde über den Oxidationskatalysator EnviCat KCO SG 1137/0.3 geleitet (Schüttung von 0,1 kg); dieser Oxidationskatalysator ist ein Pt/SiO₂-Trägerkatalysator in Perlform, Pt-Gehalt 0,3 Gew.-%. Am Oxidationskatalysator wurde das NH₃ des Desorbats bei 180 ° bis 200 °C selektiv zu N₂ und H₂O oxidiert. Der NH₃-Gehalt der Abluft betrug weniger als 10 ppm.

### Beispiel 6:

### Herstellung eines Sorbens auf Basis weitporigem, amorphem Alumosilikat mit Kupfersulfat als Sorptionsmittel

Das Handelsprodukt "Leca-Blähton" (mittlerer Porendurchmesser etwa 1.000 Å), ein körniges Adsorptionsmittel aus amorphem Alumosilikat, wurde, wie unter Beispiel 4 genannt, mit Cu²⁺ dotiert. Nach dem Trocknen wies das fertige Sorbens einen Kupfergehalt von 4,5 Gew.-% auf.

### Beispiel 7:

### Verwendung des Sorbens auf Basis Blähton zur NH₃-Absorption

Beispiel 5 wurde unter Verwendung des Sorbens aus Beispiel 6 wiederholt. Diesmal resultierte ein Desorbat mit einem NH₃-Gehalt von 10.000 ppm, das dann, wie im Beispiel 5 beschrieben, katalytisch behandelt wurde, wobei der NH₃-Gehalt der Abluft schließlich weniger als 10 ppm betrug.

### Beispiel 8:

### Oxidation des Desorbats mit unterstöchiometrischer Sauerstoffmenge

Dem in Beispiel 7 erhaltenen Desorbat mit einem NH₃-Gehalt von 10.000 ppm wurde Sauerstoff zugesetzt, bis der Sauerstoffgehalt 5.000 ppm betrug (Volumenverhältnis NH₃ : O₂ = 4 : 2). Das Gemisch wurde mit einer Raumgeschwindigkeit von 10.000 Litern/h bei 275 °C Gastemperatur über den Katalysator des Beispiels 5 geleitet. Der Umsatz an NH₃ betrug 100 %, trotz der hohen Temperatur war praktisch keine Bildung von N₂O und NOₓ zu bemerken.

## Patentansprüche

1. Verfahren zur Sorption von NH₃ aus Gasen, dadurch gekennzeichnet, daß man das Gas mit einem selektiven NH₃-Sorbens, umfassend ein Sorptionsmittel ausgewählt aus der Gruppe der anorganischen oder organischen Salze mit Fe²⁺, Fe³⁺, Co²⁺, Ni²⁺, Cr²⁺, Cr³⁺, Mn²⁺, Zn²⁺, Cu¹⁺ oder Cu²⁺-Ionen auf einem oxidischen Träger auf Basis von SiO₂, Al₂O₃ oder Alumosilikat kontaktiert, wobei der Träger einen mittleren Porendurchmesser von mindestens 25 Angström aufweist, man das mit NH₃ beladene Sorbens unter Desorption des NH₃ regeneriert und man das NH₃ enthaltende Desorbat zur Oxidation des NH₃ katalytisch behandelt.

2. Verfahren nach Anspruch 1, dadurch gekennzeichnet, daß man die Regenerierung des Sorbens bei einer Temperatur zwischen 180 °C und 250 °C vornimmt und das Desorbat sofort katalytisch behandelt.

3. Verfahren nach Anspruch 1 oder 2, dadurch gekennzeichnet, daß man einen Katalysator verwendet, der Platin auf einem keramischen Träger aufweist, oder einem Katalysator, der ein katalytisch aktives Gemisch aus Edelmetall und Übergangsmetalloxid im Molverhältnis 1:10 bis 1:200 aufweist und bei welchem das Edelmetall ausgewählt ist aus der Platin, Palladium, Rhodium, Iridium und deren Gemischen umfassenden Gruppe und das Übergangsmetalloxid ausgewählt ist aus der Gruppe der Molybdänoxide, Vanadiumoxide und deren Gemischen, oder einen Katalysator, der ein katalytisch aktives Gemisch aus Oxiden von mindestens zwei Metallen der Mangan, Eisen, Kobalt, Nickel, Kupfer und Silber umfassenden Gruppe aufweist.

4. Verfahren nach einem der vorhergehenden Ansprüche, dadurch gekennzeichnet, daß man das Desorbat auf einen NH₃-Gehalt zwischen 0,5 und 10 Vol.-% einstellt und die katalytische Oxidation mit verringertem Energieaufwand betreibt.

5. Verfahren nach einem der vorhergehenden Ansprüche, dadurch gekennzeichnet, daß man im zu behandelnden Desorbat einen unterstöchiometrischen Gehalt an Sauerstoff einstellt bezüglich der Oxidation von NH₃ zu N₂ und H₂O.

6. Zur NH₃-Sorption geeignetes Sorbens, umfassend ein Sorptionsmittel ausgewählt aus der Gruppe der organischen und bevorzugt der anorganischen Salze mit Fe²⁺, Fe³⁺, Co²⁺, Ni²⁺, Cr²⁺, Cr³⁺, Mu²⁺, Zn²⁺, Cu¹⁺ oder Cu²⁺-Ionen auf Blähton als Träger.

7. Sorbens nach Anspruch 6, bestehend aus 0,1 bis 40 Gew.-% des anorganischen Salzes, 0 bis 10 Gew.-% Wasser, Rest auf 100 Gew.-% Blähton.

8. Verwendung eines Sorbens nach einem der Ansprüche 6 und 7 zur NH₃-Sorption.
